(19) Europäisches Patentamt / European Patent Office / Office européen des brevets

(11) **EP 3 157 179 A1**

(12) **EUROPEAN PATENT APPLICATION**

(43) Date of publication:
**19.04.2017 Bulletin 2017/16**

(51) Int Cl.:
*H04B 7/185* (2006.01)    *H04W 56/00* (2009.01)

(21) Application number: **16193605.9**

(22) Date of filing: **13.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.10.2015 US 201514884447**

(71) Applicant: **Honeywell International Inc.**
**Morris Plains, NJ 07950 (US)**

(72) Inventors:
• HAQUE, Jamal
  **Morris Plains, NJ 07950 (US)**
• ROWLAND, Andy
  **Morris Plains, NJ 07950 (US)**
• HILSENRATH, Matthew Marcus
  **Morris Plains, NJ 07950 (US)**

(74) Representative: **Houghton, Mark Phillip**
**Patent Outsourcing Limited**
**1 King Street**
**Bakewell, Derbyshire DE45 1DZ (GB)**

(54) **VECTOR MECHANICS BASED DOPPLER SHIFT ESTIMATION FOR AIR TO GROUND COMMUNICATIONS**

(57)    A method of estimating Doppler shift for air to ground communications comprises obtaining an initial position of an aircraft during flight, wherein the aircraft includes an onboard database with stored positions for a plurality of ground station towers; when a subsequent position of the aircraft nears a stored position of a closest ground station tower, requesting a Doppler shift estimation for the closest ground station tower; obtaining a current position of the aircraft when requesting the Doppler shift estimation; defining an aircraft position vector from the initial position to the current position; defining a tower position vector from the initial position to the stored position; subtracting the aircraft position vector from the tower position vector to determine an aircraft to tower position vector; differentiating the aircraft to tower position vector with respect to time to determine a velocity magnitude to the closest ground station tower; and calculating a Doppler shift.

100

FIG. 1

EP 3 157 179 A1

## Description

## BACKGROUND

Providing wireless connectivity in aeronautical platforms has become a necessity in recent years. Advances in signal processing, rapid prototyping, and the high consumer demand for Internet services, as well as increases in aircraft traffic and safety, are driving the demand for high-speed data services for aviation customers. Thus, it has become desirable to provide low delay, cost effective, and high speed data connectivity for aeronautical platforms.

Most of the current high altitude aeronautical platforms, such as commercial aircraft, provide data connectivity through a satellite. However, satellite resources are limited, expensive, and offer limited data throughput as compared to a terrestrial network. A potential solution to the drawbacks of using a satellite is to provide wireless connectivity to ground stations that can provide high-speed physical layers.

One of the issues that arises in a terrestrial network is the estimation and correction of Doppler shifts based on aircraft speed and the carrier frequency. Without the correction of Doppler shifts, advanced modulation schemes, such as orthogonal frequency-division multiplexing (OFDM) or dense constellations (bits/Hz), are not possible.

## SUMMARY

A method of estimating Doppler shift for air to ground communications comprises obtaining an initial position of an aircraft during flight, wherein the aircraft includes an onboard database with stored positions for a plurality of ground station towers; when a subsequent position of the aircraft nears a stored position of a closest ground station tower, requesting a Doppler shift estimation for the closest ground station tower; obtaining a current position of the aircraft when requesting the Doppler shift estimation; defining an aircraft position vector from the initial position to the current position; defining a tower position vector from the initial position to the stored position; subtracting the aircraft position vector from the tower position vector to determine an aircraft to tower position vector; differentiating the aircraft to tower position vector with respect to time to determine a velocity magnitude to the closest ground station tower; and calculating a Doppler shift.

## BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:

Figure 1 is a flow diagram for a method of estimating Doppler shift for air to ground communications;

Figure 2 is a three-dimensional graphical representation of an exemplary aircraft and tower configuration in which the method of estimating Doppler shift can be implemented;

Figure 3 is a diagram illustrating the use of vector mechanics in the method of estimating Doppler shift; and

Figure 4 is a block diagram of a system that can implement the method of estimating Doppler shift, according to one embodiment.

## DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A method and system for vector mechanics based Doppler shift estimation is provided for air to ground (ATG) communications. The present method estimates (or predicts) the Doppler shift of a radio signal in ATG communications based on geometry. This technique can be used for orthogonal frequency-division multiplexing (OFDM) radio signals, such as used in 4G Long Term Evolution (LTE) systems.

Modern aircraft are equipped with advanced avionics that use the global positioning system (GPS), an inertial measurement unit (IMU), or both. A navigation computer in the aircraft uses GPS and/or an IMU signals to provide accurate location of the aircraft while in flight. In addition, ground station towers for aircraft communications have fixed positions.

The present method establishes a starting aircraft position by a navigation computer output. The ground station tower positions can be preloaded and stored in an onboard flight database. As the system knows the location of the aircraft and based on the preloaded tower positions in the database, the location of all towers within a specified range is known. Therefore, vector mechanics can be used to estimate a velocity magnitude to the closet tower and calculate the Doppler shift.

For example, as the aircraft position nears the closest stored tower position (minimum magnitude position vector, tower to aircraft), a Doppler shift estimation request is made for this tower. At this request, the navigation computer is queried for a new position of the aircraft, which will be a running position vector quantity. An aircraft to tower radius vector is then established by subtracting a current aircraft position vector from an initial tower position vector. This difference position vector (aircraft to tower) magnitude is divided by a sample time to determine a velocity magnitude to the closest tower ($V_{tower}$). While in-flight, the velocity (V) of the aircraft is known, and the carrier frequency ($f_c$) of the air to ground communication link is known. Therefore, the Doppler shift can be calculated as:

$$f_d = V_{tower} * f_c / c.$$

where $f_d$ is the difference in Doppler frequency, and c is the speed of light.

The present method and system have various benefits. For example, the present method allows for estimating a candidate hand-off downlink frequency that will speed up downlink synchronization, and therefore the overall handover time and traffic interruption in time will be minimized. The present method also provides a predictive Doppler correction for the modem and compensates for large frequency changes, as the modem has to estimate and compensate any residual Doppler shift. Further, the present approach helps to increase overall data throughput and provides more seamless continuous data connectivity through handovers. In addition, the present method also aids in determining both downlink and uplink frequency compensation, such that the transmitted frequency meets regulatory requirements.

Further details of the present method and system are described hereafter with reference to the drawings.

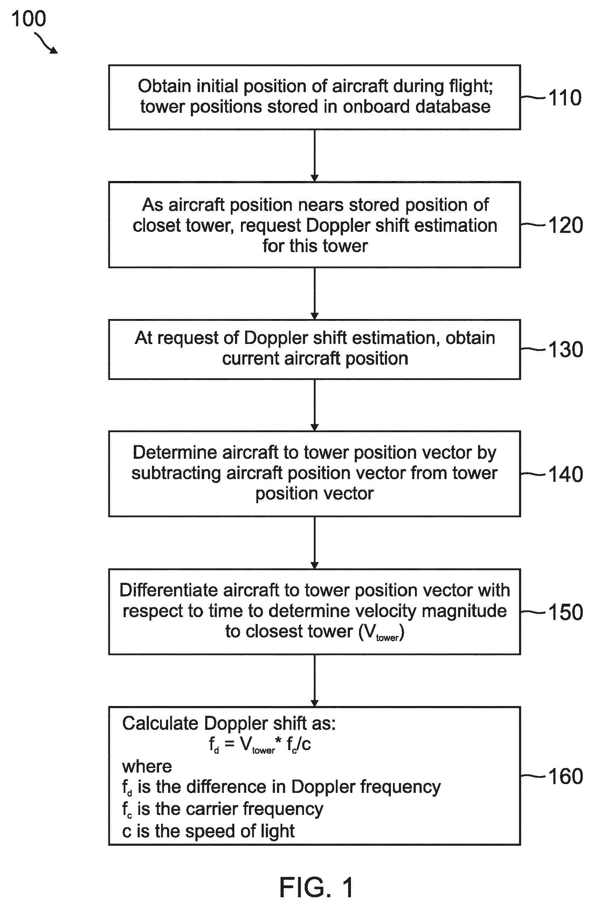

Figure 1 is a flow diagram 100 for a method of estimating Doppler shift for air to ground communications according to one approach. During flight, an initial position of an aircraft is obtained (block 110), such as from a navigation computer output. The aircraft includes an onboard database with stored positions for a plurality of ground station towers. As the position of the aircraft nears a stored position of a closest ground station tower, method 100 requests a Doppler shift estimation for this tower (block 120). A current position of the aircraft is obtained when requesting the Doppler shift estimation (block 130). The method 100 then defines an aircraft position vector from the initial position to the current position of the aircraft, and defines a tower position vector from the initial position to the stored position of the closet ground station tower.

The initial and current positions of the aircraft can be obtained from a GPS receiver onboard the aircraft, an IMU onboard the aircraft, or a combination of the GPS receiver and IMU onboard the aircraft. The onboard database with the stored positions for the ground station towers can be located in a flight computer or in modem hardware onboard the aircraft.

The method 100 determines an aircraft to tower position vector by subtracting the aircraft position vector from the tower position vector (block 140). The method 100 then differentiates the aircraft to tower position vector with respect to time to determine a velocity magnitude ($V_{tower}$) to the closest tower (block 150). A Doppler shift is then calculated using the equation:

$$f_d = V_{tower} * f_c / c.$$

where $f_d$ is a difference in Doppler frequency, $f_c$ is a carrier frequency, and c is the speed of light (block 160).

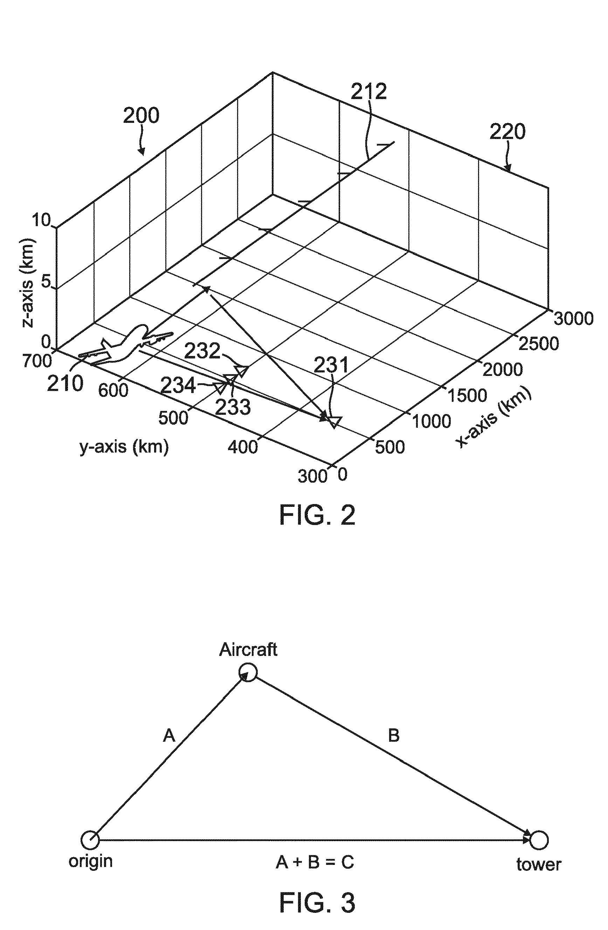

Figure 2 is a three-dimensional (3D) graphical representation 200 of an exemplary aircraft and tower configuration in which the method of estimating Doppler shift can be implemented. An aircraft 210 is shown traveling along a flight path 212 within a 3D grid 220 that has an x-axis, y-axis and z-axis defined by units of kilometers (km). There are four ground station towers 231, 232, 233, and 234 located within grid 220.

Vector mechanics is used to estimate a velocity vector toward one of the ground towers, in this case tower 231. The position vectors can be defined from some arbitrary datum. The aircraft position is known, and a database on the aircraft carries the position for towers 231, 232, 233, and 234. By differencing the magnitudes of discrete position vectors, it is possible to arrive at a series of magnitudes of discrete velocity vectors. As the tower locations are known, the locations can be defined within a plane with respect to the previously identified datum.

Figure 3 is a diagram illustrating the use of vector mechanics to estimate a velocity vector toward one of the ground towers. An aircraft position vector A is defined from a set of origin coordinates to the current aircraft position. An aircraft to tower position vector B is defined from the current aircraft position to the position of the ground tower. A tower position vector C is defined from the origin coordinates to the position of the ground tower, with A + B = C. Based on vector mechanics, it follows that C - A = B. Since the aircraft position vector A is known, and the tower position vector C is known, these can be subtracted to find the aircraft to tower position vector B. Differentiating the aircraft to tower position vector B with respect to time gives the velocity vector magnitude of the aircraft with respect to the tower of interest. The velocity vector magnitude is then used in the Doppler shift calculation for that tower.

With multiple ground towers in communication range with the aircraft, the present method can be used to estimate which Doppler shift to select from for the air to ground communication. For example, given the radius of operation, such as a cell range of 150 km, a Doppler shift based on velocity vectors for all towers within the cell range is calculated. A received signal (reference signal) strength change is used to determine if the aircraft is moving toward or away from a particular tower of interest. If the received signal power is increasing, the tower of interest is in front of the aircraft. If the received signal power is decreasing, the tower of interest is toward the back of the aircraft. If the received power is relatively constant then the tower of interest is on the left side or the right side of the aircraft.

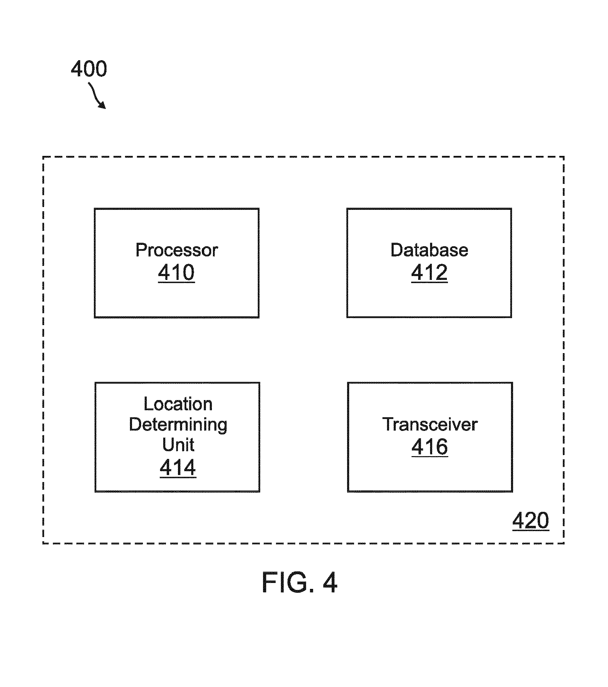

Figure 4 illustrates a system 400 according to one embodiment, which can implement the method for estimating Doppler shift described herein. In general, system 400 includes a processor 410 onboard an aircraft 420, with an onboard database 412 that includes stored positions for multiple ground station towers. The system 400 also has an aircraft location determining unit 414, which can include a GPS receiver, an IMU, or combination of both. An onboard transceiver 416 provides for communications with the ground station towers.

The processor used in the present method and system can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The processor can also include functions with software programs, firmware, or other computer readable instructions for carrying out various process tasks, calculations, and control functions used in the present method and system.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard discs, compact discs, DVDs, Blu-ray discs, or other optical storage discs; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

Example Embodiments

Example 1 includes a method of estimating Doppler shift for air to ground communications, the method comprising: obtaining an initial position of an aircraft during flight, wherein the aircraft includes an onboard database with stored positions for a plurality of ground station towers; when a subsequent position of the aircraft nears a stored position of a closest ground station tower, requesting a Doppler shift estimation for the closest ground station tower; obtaining a current position of the aircraft when requesting the Doppler shift estimation; defining an aircraft position vector from the initial position to the current position; defining a tower position vector from the initial position to the stored position; subtracting the aircraft position vector from the tower position vector to determine an aircraft to tower position vector; differentiating the aircraft to tower position vector with respect to time to determine a velocity magnitude to the closest ground station tower; and calculating a Doppler shift.

Example 2 includes the method of Example 1, wherein the Doppler shift is calculated as: $f_d = V_{tower}*f_c/c$, where $f_d$ is a difference in Doppler frequency, $V_{tower}$ is the velocity magnitude to the closest ground station tower, $f_c$ is a carrier frequency, and c is the speed of light.

Example 3 includes the method of any of Examples 1-2, wherein the initial and current positions of the aircraft are obtained from a global positioning system (GPS) receiver onboard the aircraft, an inertial measurement unit (IMU) onboard the aircraft, or a combination of the GPS receiver and the IMU onboard the aircraft.

Example 4 includes the method of any of Examples 1-3, wherein the onboard database is located in a flight computer or in modem hardware.

Example 5 includes the method of any of Examples 1-4, wherein the carrier frequency is utilized in orthogonal frequency-division multiplexing.

Example 6 includes the method of Example 5, wherein the carrier frequency is utilized in long term evolution (LTE) air to ground communications.

Example 7 includes a system for air to ground communications, the system comprising a processor onboard an aircraft; a database onboard the aircraft, the database including stored positions for a plurality of ground station towers; and a non-transitory computer readable medium having instructions stored thereon executable by the processor to perform a method for estimating Doppler shift. The method comprises obtaining an initial position of the aircraft during flight; when a subsequent position of the aircraft nears a stored position of a closest ground station tower, requesting a Doppler shift estimation for the closest ground station tower; obtaining a current position of the aircraft when requesting the Doppler shift estimation; defining an aircraft position vector from the initial position to the current position; defining a tower position vector from the initial position to the stored position; subtracting the aircraft position vector from the tower position vector to determine an aircraft to tower position vector; differentiating the aircraft to tower position vector with respect to time to determine a velocity magnitude to the closest ground station tower ($V_{tower}$); and calculating a Doppler shift as: $f_d = V_{tower}*f_c/c$. where $f_d$ is a difference in Doppler frequency, $f_c$ is a carrier frequency, and c is the speed of light.

Example 8 includes the system of Example 7, further comprising a location determining unit onboard the aircraft, wherein the initial and current positions of the aircraft are obtained from the location determining unit.

Example 9 includes the system of Example 8, wherein the location determining unit includes a GPS receiver, an IMU, or a combination of the GPS receiver and the IMU.

Example 10 includes the system of any of Examples 7-9, wherein the onboard database is located in a flight computer or in modem hardware.

Example 11 includes the system of any of Examples 7-10, wherein the carrier frequency is utilized in orthogonal frequency-division multiplexing.

Example 12 includes the system of Example 11, wherein the carrier frequency is utilized in LTE air to ground communications.

Example 13 includes a computer program product comprising a non-transitory computer readable medium having instructions stored thereon executable by a processor to perform a method of estimating Doppler shift for air to ground communications. The method comprises obtaining an initial position of the aircraft during flight; when a subsequent position of the aircraft nears a stored position of a closest ground station tower, requesting a Doppler shift estimation for the closest ground station tower; obtaining a current position of the aircraft when requesting the Doppler shift estimation; defining an aircraft position vector from the initial position to the current position; defining a tower position vector from the initial position to the stored position; subtracting the aircraft position vector from the tower position vector to determine an aircraft to tower position vector; differentiating the aircraft to tower position vector with respect to time to determine a velocity magnitude to the closest ground station tower ($V_{tower}$); and calculating a Doppler shift as: $f_d = V_{tower}*f_c/c$. where $f_d$ is a difference in Doppler frequency, $f_c$ is a carrier frequency, and c is the speed of light.

Example 14 includes the computer program product of Example 13, wherein the carrier frequency is utilized in orthogonal frequency-division multiplexing.

Example 15 includes the computer program product of Example 14, wherein the carrier frequency is utilized in LTE air to ground communications.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

**Claims**

1.  A method of estimating Doppler shift for air to ground communications, the method comprising:

    obtaining an initial position of an aircraft during flight, wherein the aircraft includes an onboard database with stored positions for a plurality of ground station towers;
    when a subsequent position of the aircraft nears a stored position of a closest ground station tower, requesting a Doppler shift estimation for the closest ground station tower;
    obtaining a current position of the aircraft when requesting the Doppler shift estimation;
    defining an aircraft position vector from the initial position to the current position;
    defining a tower position vector from the initial position to the stored position;
    subtracting the aircraft position vector from the tower position vector to determine an aircraft to tower position vector;
    differentiating the aircraft to tower position vector with respect to time to determine a velocity magnitude to the closest ground station tower; and
    calculating a Doppler shift.

2.  The method of claim 1, wherein the Doppler shift is calculated as:

$$f_d = V_{tower} * f_c/c.$$

where $f_d$ is a difference in Doppler frequency, $V_{tower}$ is the velocity magnitude to the closest ground station tower, $f_c$ is a carrier frequency, and c is the speed of light.

3. The method of claim 1, wherein the initial and current positions of the aircraft are obtained from a global positioning system (GPS) receiver onboard the aircraft, an inertial measurement unit (IMU) onboard the aircraft, or a combination of the GPS receiver and the IMU onboard the aircraft.

4. The method of claim 1, wherein the onboard database is located in a flight computer or in modem hardware.

5. The method of claim 1, wherein the carrier frequency is utilized in orthogonal frequency-division multiplexing.

6. The method of claim 5, wherein the carrier frequency is utilized in long term evolution (LTE) air to ground communications.

7. A system for air to ground communications, the system comprising:

a processor onboard an aircraft;
a database onboard the aircraft, the database including stored positions for a plurality of ground station towers; and
a non-transitory computer readable medium having instructions stored thereon executable by the processor to perform a method for estimating Doppler shift, the method comprising:

obtaining an initial position of the aircraft during flight;
when a subsequent position of the aircraft nears a stored position of a closest ground station tower, requesting a Doppler shift estimation for the closest ground station tower;
obtaining a current position of the aircraft when requesting the Doppler shift estimation;
defining an aircraft position vector from the initial position to the current position;
defining a tower position vector from the initial position to the stored position;
subtracting the aircraft position vector from the tower position vector to determine an aircraft to tower position vector;
differentiating the aircraft to tower position vector with respect to time to determine a velocity magnitude to the closest ground station tower ($V_{tower}$); and
calculating a Doppler shift as:

$$f_d = V_{tower} * f_c/c.$$

where $f_d$ is a difference in Doppler frequency, $f_c$ is a carrier frequency, and c is the speed of light.

8. The system of claim 7, further comprising a location determining unit onboard the aircraft, wherein the initial and current positions of the aircraft are obtained from the location determining unit.

9. The system of claim 8, wherein the location determining unit includes a global positioning system (GPS) receiver, an inertial measurement unit (IMU), or a combination of the GPS receiver and the IMU.

10. A computer program product, comprising:

a non-transitory computer readable medium having instructions stored thereon executable by a processor to perform a method of estimating Doppler shift for air to ground communications, the method comprising:

obtaining an initial position of the aircraft during flight;
when a subsequent position of the aircraft nears a stored position of a closest ground station tower, requesting a Doppler shift estimation for the closest ground station tower;
obtaining a current position of the aircraft when requesting the Doppler shift estimation;
defining an aircraft position vector from the initial position to the current position;
defining a tower position vector from the initial position to the stored position;
subtracting the aircraft position vector from the tower position vector to determine an aircraft to tower position vector;
differentiating the aircraft to tower position vector with respect to time to determine a velocity magnitude to the closest ground station tower ($V_{tower}$); and
calculating a Doppler shift as:

$$f_d = V_{tower} * f_c/c.$$

where $f_d$ is a difference in Doppler frequency, $f_c$ is a carrier frequency, and c is the speed of light.

100

```
┌─────────────────────────────────────────┐
│  Obtain initial position of aircraft during flight;   │──110
│  tower positions stored in onboard database          │
└─────────────────────────────────────────┘
                     │
                     ▼
┌─────────────────────────────────────────┐
│  As aircraft position nears stored position of       │──120
│  closet tower, request Doppler shift estimation      │
│  for this tower                                      │
└─────────────────────────────────────────┘
                     │
                     ▼
┌─────────────────────────────────────────┐
│  At request of Doppler shift estimation, obtain      │──130
│  current aircraft position                           │
└─────────────────────────────────────────┘
                     │
                     ▼
┌─────────────────────────────────────────┐
│  Determine aircraft to tower position vector by      │──140
│  subtracting aircraft position vector from tower     │
│  position vector                                     │
└─────────────────────────────────────────┘
                     │
                     ▼
┌─────────────────────────────────────────┐
│  Differentiate aircraft to tower position vector with│──150
│  respect to time to determine velocity magnitude     │
│  to closest tower (V_tower)                          │
└─────────────────────────────────────────┘
                     │
                     ▼
┌─────────────────────────────────────────┐
│  Calculate Doppler shift as:                         │
│          f_d = V_tower * f_c/c                       │
│  where                                               │──160
│  f_d is the difference in Doppler frequency          │
│  f_c is the carrier frequency                        │
│  c is the speed of light                             │
└─────────────────────────────────────────┘
```

Calculate Doppler shift as:
$$f_d = V_{tower} * f_c/c$$
where
$f_d$ is the difference in Doppler frequency
$f_c$ is the carrier frequency
$c$ is the speed of light

FIG. 1

FIG. 2

FIG. 3

400

Processor
410

Database
412

Location
Determining
Unit
414

Transceiver
416

420

FIG. 4

Europäisches
Patentamt

European
Patent Office

Office européen
des brevets

# EUROPEAN SEARCH REPORT

**Application Number**

EP 16 19 3605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 599 956 B1 (MITCHELL JAMES P [US]) 3 December 2013 (2013-12-03) * abstract * * figures 1,2, 3, 5, 8 * * column 1, line 63 - line 65 * * column 3, line 1 - line 64 * * column 4, line 10 - line 39 * * column 4, line 63 - line 67 * * column 5, line 54 - line 67 * * column 5, line 1 - line 2 * * column 5, line 26 - line 38 * * column 6, line 1 - line 31 * ----- | 1-10 | INV. H04B7/185 H04W56/00 |
| Y | GENERAL PHYSICS: "Position", GENERAL PHYSICS, 8 January 2014 (2014-01-08), XP055351452, * page 3 - page 7 * ----- | 1-10 | |
| A | WO 02/17675 A2 (PHASENET WIRELESS COMM CORP [US]; FOOTE HOWARD [US]) 28 February 2002 (2002-02-28) * abstract * * figure 7 * * page 11, line 20 - line 37 * * page 12, line 1 - line 26 * * page 13, line 1 - line 14 * ----- | 1-10 | TECHNICAL FIELDS SEARCHED (IPC) H04B H04W |
| A | SHERVIN AMIRI ET AL: "Accurate Doppler Frequency Shift Estimation for any Satellite Orbit", RECENT ADVANCES IN SPACE TECHNOLOGIES, 2007. RAST '07. 3RD INTERN ATIONAL CONFERENCE ON, IEEE, PI, 1 June 2007 (2007-06-01), pages 602-607, XP031123373, ISBN: 978-1-4244-1056-9 * Sections II, III and IV * ----- -/-- | 1-10 | |

The present search report has been drawn up for all claims

| Place of search | Date of completion of the search | Examiner |
|---|---|---|
| The Hague | 3 March 2017 | Arroyo Valles, |

EPO FORM 1503 03.82 (P04C01)

Europäisches
Patentamt

European
Patent Office

Office européen
des brevets

# EUROPEAN SEARCH REPORT

Application Number

EP 16 19 3605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 490 389 A1 (ALCATEL LUCENT [FR]) 22 August 2012 (2012-08-22) * paragraph [0003] * * paragraph [0009] * ----- | 1-10 | |

TECHNICAL FIELDS
SEARCHED       (IPC)

The present search report has been drawn up for all claims

| Place of search | Date of completion of the search | Examiner |
|---|---|---|
| The Hague | 3 March 2017 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 3605

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2017

| Patent document cited in search report | | Publication date | Patent family member(s) | | Publication date |
|---|---|---|---|---|---|
| US 8599956 | B1 | 03-12-2013 | NONE | | |
| WO 0217675 | A2 | 28-02-2002 | AU | 9053601 A | 04-03-2002 |
| | | | WO | 0217675 A2 | 28-02-2002 |
| EP 2490389 | A1 | 22-08-2012 | BR 112013017386 A2 | | 04-10-2016 |
| | | | CN | 103339905 A | 02-10-2013 |
| | | | EP | 2490389 A1 | 22-08-2012 |
| | | | JP | 2014510437 A | 24-04-2014 |
| | | | KR | 20130129423 A | 28-11-2013 |
| | | | US | 2013329721 A1 | 12-12-2013 |
| | | | WO | 2012110143 A1 | 23-08-2012 |

EPO FORM P0459

For more details about this annex : see Official Journal of the European Patent Office, No. 12/82